# FASCICULE DE BREVET EUROPEEN

(11) **EP 4 232 946 B1**
(45) Date de publication et mention de la délivrance du brevet: **23.04.2025**
(21) Numéro de dépôt: 21807183.5
(22) Date de dépôt: 19.10.2021
(51) Int. Cl.: G06V 20/69

(54) **PROCÉDÉ DE CLASSIFICATION D'UNE SÉQUENCE D'IMAGES D'ENTRÉE REPRÉSENTANT UNE PARTICULE DANS UN ÉCHANTILLON AU COURS DU TEMPS**
VERFAHREN ZUR KLASSIFIZIERUNG EINER SEQUENZ VON EINGABEBILDERN, DIE EIN TEILCHEN IN EINER PROBE IM LAUFE DER ZEIT DARSTELLEN
METHOD FOR CLASSIFYING A SEQUENCE OF INPUT IMAGES REPRESENTING A PARTICLE IN A SAMPLE OVER TIME

(30) Priorité: 20.10.2020 FR 2010744
(43) Date de publication de la demande: 30.08.2023
(73) Titulaire: BIOMERIEUX, 69280 Marcy-L'Etoile (FR); Bioaster, 69007 Lyon (FR)
(72) Inventeur: MAHÉ, Pierre, 38250 LANS EN VERCORS (FR); EL AZAMI, Meriem, 69210 L'ARBRESLE (FR); DEGOUT-CHARMETTE, Elodie, 01600 TOUSSIEUX (FR); SEDAGHAT, Zohreh, 69350 LA MULATIERE (FR); JOSSO, Quentin, 69003 LYON (FR); ROL, Fabian, 38290 LA VERPILLIERE (FR)
(74) Mandataire: Regimbeau
(86) Numéro de dépôt international: PCT/FR2021/051817
(87) Numéro de publication internationale: WO 2022/084616

(56) Documents cités:
- BLIZNUKS D ET AL: "Embedded neural network system for microorganisms growth analysis", PROGRESS IN BIOMEDICAL OPTICS AND IMAGING, SPIE - INTERNATIONAL SOCIETY FOR OPTICAL ENGINEERING, BELLINGHAM, WA, US, vol. 11457, 9 April 2020 (2020-04-09), pages 1145720 - 1145720, XP060130569, ISSN: 1605-7422, ISBN: 978-1-5106-0027-0, DOI: 10.1117/12.2564404
- HAY EDOUARD A. ET AL: "Performance of convolutional neural networks for identification of bacteria in 3D microscopy datasets", vol. 14, no. 12, 3 December 2018 (2018-12-03), XP055812639, Retrieved from the Internet <URL:https://storage.googleapis.com/plos-corpus-prod/10.1371/journal.pcbi.1006628/2/pcbi.1006628.pdf?X-Goog-Algorithm=GOOG4-RSA-SHA256&X-Goog-Credential=wombat-sa@plos-prod.iam.gserviceaccount.com/20210610/auto/storage/goog4_request&X-Goog-Date=20210610T120440Z&X-Goog-Expires=86400&X-Goog-SignedHeaders=h> DOI: 10.1371/journal.pcbi.1006628
- HUI YU ET AL: "Phenotypic Antimicrobial Susceptibility Testing with Deep Learning Video Microscopy", ANALYTICAL CHEMISTRY, vol. 90, no. 10, 20 April 2018 (2018-04-20), US, pages 6314 - 6322, XP055663145, ISSN: 0003-2700, DOI: 10.1021/acs.analchem.8b01128

## Description

### DOMAINE TECHNIQUE GENERAL

La présente invention concerne le domaine de l'acquisition optique de particules biologiques. Les particules biologiques peuvent être des microorganismes tels que des bactéries, des champignons ou des levures par exemple. Il peut également s'agir de cellules, organismes multicellulaires, ou toute autre particule de type particule polluante, poussière.

L'invention trouve une application particulièrement avantageuse pour analyser l'état d'une particule biologique, par exemple pour savoir l'état métabolique d'une bactérie suite à l'application d'un antibiotique. L'invention permet, par exemple, de réaliser un antibiogramme d'une bactérie.

### ETAT DE L'ART

Un antibiogramme est une technique de laboratoire visant à tester le phénotype d'une souche bactérienne vis-à-vis d'un ou plusieurs antibiotiques. Un antibiogramme est classiquement réalisé par culture d'un échantillon contenant des bactéries et un antibiotique.

La demande de brevet européen N° 2 603 601 décrit une méthode pour réaliser un antibiogramme en visualisant l'état des bactéries après une durée d'incubation en présence d'un antibiotique. Pour visualiser les bactéries, les bactéries sont marquées par des marqueurs fluorescents permettant de révéler leurs structures. La mesure de la fluorescence des marqueurs permet alors de déterminer si l'antibiotique a agi efficacement sur les bactéries.

Le processus classique pour déterminer les antibiotiques efficaces sur une souche bactérienne consiste à réaliser un prélèvement contenant ladite souche (e.g. sur un patient, un animal, un lot alimentaire, etc.) puis à transmettre le prélèvement à un centre d'analyse. Lorsque le centre d'analyse réceptionne le prélèvement, il procède tout d'abord à la culture de la souche bactérienne pour obtenir au moins une colonie de celle-ci, culture comprise entre 24 heures et 72 heures. Il prépare ensuite à partir de cette colonie plusieurs échantillons comprenant des antibiotiques différents et/ou des concentrations d'antibiotiques différentes, puis met à nouveau les échantillons à incuber. Après une nouvelle durée de culture comprise également entre 24 et 72 heures, chaque échantillon est analysé manuellement pour déterminer si l'antibiotique a agi efficacement. Les résultats sont alors retransmis au praticien pour appliquer l'antibiotique et/ou la concentration d'antibiotique le plus efficace.

Cependant, le processus de marquage est particulièrement long et complexe à réaliser et ces marqueurs chimiques ont un effet cytotoxique sur les bactéries. Il s'ensuit que ce mode de visualisation ne permet pas d'observer les bactéries à plusieurs instants de la culture des bactéries, d'où la nécessité d'utiliser un temps de culture suffisamment long, de l'ordre de 24 à 72 heures, pour garantir la fiabilité de la mesure. D'autres méthodes de visualisation de particules biologiques utilisent un microscope, permettant une mesure non destructive d'un échantillon.

La microscopie holographique numérique ou DHM (Digital Holographic Microscopy) est une technique d'imagerie permettant de s'affranchir des contraintes de profondeur de champ de la microscopie optique classique. Schématiquement, elle consiste à enregistrer un hologramme formé par l'interférence entre les ondes lumineuses diffractées par l'objet observé et une onde de référence présentant une cohérence spatiale. Cette technique est décrite dans l'article de revue de Myung K.Kim intitulé « Principles and techniques of digital holographic microscopy » publié dans SPIE Reviews Vol. 1, N°l, Janvier 2010.

Récemment, il a été proposé d'utiliser la microscopie holographique numérique pour identifier des micro-organismes de manière automatisée. Ainsi, la demande internationale WO2017/207184 décrit une méthode d'acquisition d'une particule intégrant une simple acquisition sans focalisation associée à une reconstruction numérique de la focalisation, permettant d'observer une particule biologique en limitant le temps d'acquisition.

Typiquement, cette solution permet de détecter les modifications structurelles d'une bactérie en présence d'un antibiotique après une incubation de seulement une dizaine de minute, et sa sensibilité au bout de deux heures (détection de la présence ou de l'absence d'une division ou d'un motif codant la division) contrairement au processus classique précédemment décrit qui peut prendre plusieurs jours. En effet, les mesures étant non destructives, il est possible de réaliser des analyses très tôt dans le processus de culture sans risquer de détruire l'échantillon et donc de prolonger le temps d'analyse.

Il même est possible de suivre une particule sur plusieurs images successives de sorte à former un film représentant l'évolution d'une particule au cours du temps (puisque les particules ne sont pas altérées après la première analyse) afin de visualiser son comportement, par exemple sa vitesse de déplacement ou son processus de division cellulaire.

On comprend donc que le procédé de visualisation donne d'excellents résultats. La difficulté tient dans l'interprétation en elle-même de ces images ou ce film si l'on souhaite par exemple conclure sur la susceptibilité d'une bactérie à l'antibiotique présent dans l'échantillon, en particulier de manière automatique.

Diverses techniques ont été proposées allant du simple comptage de bactéries au cours du temps à l'analyse dit morphologique visant à détecter par analyse d'image des « configurations » particulières. Par exemple, lorsqu'une bactérie se prépare à la division, il apparait deux pôles dans la distribution, bien avant la division elle-même qui se traduit par deux portions distinctes de la distribution.

Il a été proposé dans l'article Choi, J., Yoo, J., Lee, M., et al. (2014). A rapid antimicrobial susceptibility test based on single-cell morphological analysis. Science Translational Medicine, 6(267). https://doi.org/10.1126/scitranslmed.3009650 de combiner les deux techniques pour évaluer un effet antibiotique. Cependant, comme souligné par les auteurs, leur approche nécessite une calibration très fine d'un certain nombre de seuils qui dépendent fortement de la nature des changements morphologiques provoqués par les antibiotiques.

Plus récemment, l'article Yu, H., Jing, W., Iriya, R., et al. (2018). Phenotypic Antimicrobial Susceptibility Testing with Deep Learning Video Microscopy. Analytical Chemistry, 90(10), 6314-6322. https://doi.org/10.1021/acs.analchem.8b01128 décrit une approche basée sur l'apprentissage profond (deep learning). Les auteurs proposent d'extraire les caractéristiques morphologiques ainsi que des caractéristiques liées au mouvement des bactéries au moyen d'un réseau de neurones à convolution (Convolutional Neural Network, CNN). Cette solution s'avère cependant d'une part très lourde en termes de ressources informatique, et requiert une vaste base d'images d'apprentissage pour entraîner le CNN. Les documents "Embedded neural network system for microorganisms growth analysis" pour D. Bliznuks et al., "Performance of convolutional neural networks for identification of bacteria in 3D microscopy datasets" pour E. Hay et al. et "Phenotipic Antimicrobial Susceptibility Testing with Deep Learning Video Microscopy" pour Hui Yu et al. seraient aussi relevants.

Le problème technique objectif de la présente invention est, par conséquent, de pouvoir disposer d'une solution à la fois plus performante et plus légère de classification d'images d'une particule biologique.

### PRESENTATION DE L'INVENTION

Selon un premier aspect, la présente invention concerne un procédé de classification d'une séquence d'images d'entrée représentant une particule cible dans un échantillon, le procédé étant caractérisé en ce qu'il comprend la mise en œuvre, par des moyens de traitement de données d'un client, d'étapes de :
(b) Concaténation desdites images d'entrée de la séquence sous la forme d'une pile tridimensionnelle ;
(c) Classification directe de ladite pile tridimensionnelle au moyen d'un réseau de neurones à convolution, CNN, ledit CNN étant composé d'une succession de blocs de convolution composés d'une couche de convolution dite 3D, appliquant à une carte de caractéristiques d'entrée de dimension quatre des filtres de dimension quatre de sorte à générer une carte de caractéristiques de sortie de dimension quatre, une couche d'activation et une couche de mise en commun 3D, puis une couche d'aplatissement, et enfin une ou plusieurs couches entièrement connectées.

Selon des caractéristiques avantageuses et non limitatives :
Les particules sont représentées d'une manière homogène dans chaque image d'entrée, en particulier centrées et alignées selon une direction prédéterminée.

Le procédé comprend une étape (a) d'extraction de chaque image d'entrée d'une image globale de l'échantillon, de sorte à représenter ladite particule cible de ladite manière homogène.

L'étape (a) comprend, pour chaque image d'entrée, la segmentation de ladite image globale de sorte à détecter ladite particule cible dans l'échantillon, puis le recadrage de l'image d'entrée sur ladite particule cible détectée.

L'étape (a) comprend l'obtention de ladite image globale à partir d'une image en intensité de l'échantillon acquise par un dispositif d'observation.

Ladite pile tridimensionnelle présente deux dimensions spatiales et une dimension temporelle, lesdits filtres et cartes de caractéristiques présentant comme trois premières dimensions lesdites dimensions spatiales et temporelle, et comme quatrième dimension une profondeur sémantique.

Les filtres de ladite couche de convolution 3D présentent une profondeur égale à la profondeur de la carte de caractéristiques d'entrée, et la carte de caractéristiques de sortie présente une profondeur égale au nombre de filtres de la couche de convolution 3D.

Ledit CNN comprend seulement deux blocs de convolution.

Le procédé comprend une étape (a0) d'apprentissage, par des moyens de traitement de données d'un serveur, des paramètres dudit classifieur à partir d'une base d'apprentissage séquences déjà classifiées d'images de particules dans ledit échantillon.

Selon un deuxième aspect, est proposé un système de classification d'une séquence d'images d'entrée représentant une particule cible dans un échantillon au cours du temps, comprenant au moins un client comprenant des moyens de traitement de données, caractérisé en ce que lesdits moyens de traitement de données sont configurés pour implémenter :
- la concaténation desdites images d'entrée de la séquence sous la forme d'une pile tridimensionnelle ;
- La classification directe de ladite pile tridimensionnelle au moyen d'un réseau de neurones à convolution, CNN, , ledit CNN étant composé d'une succession de blocs de convolution composés d'une couche de convolution dite 3D, appliquant à une carte de caractéristiques d'entrée de dimension quatre des filtres de dimension quatre de sorte à générer une carte de caractéristiques de sortie de dimension quatre, une couche d'activation et une couche de mise en commun 3D, puis une couche d'aplatissement, et enfin une ou plusieurs couches entièrement connectées.

Selon des caractéristiques avantageuses et non limitatives, le système comprend en outre un dispositif d'observation de ladite particule cible dans l'échantillon.

Selon un troisième et un quatrième aspect sont proposés un produit programme d'ordinateur comprenant des instructions de code pour l'exécution d'un procédé selon le premier aspect de classification d'une séquence d'images d'entrée représentant une particule cible dans un échantillon ; et un moyen de stockage lisible par un équipement informatique sur lequel un produit programme d'ordinateur comprend des instructions de code pour l'exécution d'un procédé selon le premier aspect de classification d'une séquence d'images d'entrée représentant une particule cible dans un échantillon.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en œuvre du procédé selon l'invention ;
- la figure 2 représente un exemple de dispositif d'observation de particules dans un échantillon utilisé dans un mode de réalisation préféré du procédé selon l'invention ;
- la figure 3a illustre l'obtention de l'image d'entrée dans un mode de réalisation du procédé selon l'invention ;
- la figure 3b illustre l'obtention de l'image d'entrée dans un mode de réalisation préféré du procédé selon l'invention ;
- la figure 4 représente les étapes d'un mode de réalisation préféré du procédé selon l'invention ;
- la figure 5 représente un exemple d'architecture de réseau de neurones à convolution utilisé dans un mode de réalisation préféré du procédé selon l'invention.

### DESCRIPTION DETAILLEE

### Architecture

L'invention concerne un procédé de classification d'une séquence d'images d'entrée représentatives d'une particule 11a-11f présente dans un échantillon 12, dite particule cible. A noter que le procédé peut être mis en œuvre en parallèle pour tout ou partie des particules 11a-11f présentes dans un échantillon 12, chacune étant considérée particule cible à tour de rôle.

Comme l'on verra, ce procédé comprendre une composante d'apprentissage automatique, et notamment un réseau de neurones à convolution, CNN.

Les données d'entrée ou d'apprentissage sont de type image, et représentent la particule cible 11a-11f dans un échantillon 12 (en d'autres termes il s'agit d'images de l'échantillon dans lequel la particule cible est visible). Ladite séquence est constituée une pluralité d'images d'entrée de la même particule cible 11a-11f au cours du temps. Comme l'on verra, on peut le cas échéant avoir en entrée une pluralité de séquences d'images de particules 11a-11f de l'échantillon 12 si plusieurs particules sont considérées.

L'échantillon 12 consiste en un liquide tel que de l'eau, une solution tampon, un milieu de culture ou un milieu réactif (comprenant ou non un antibiotique), dans lequel se trouvent les particules 11a-11f à observer.

En variante, l'échantillon 12 peut se présenter sous la forme d'un milieu solide, de préférence translucide, tel qu'une gélose agar-agar, dans lequel se trouvent les particules 11a-11f. L'échantillon 12 peut également être un milieu gazeux. Les particules 11a-11f peuvent se situer à l'intérieur du milieu ou bien à la surface de l'échantillon 12.

Les particules 11a-11f peuvent être des microorganismes tels que des bactéries, des champignons ou des levures. Il peut également s'agir de cellules, organismes multicellulaires, ou toute autre particule de type particule polluante, poussière. Dans la suite de la description, on prendra l'exemple préféré dans laquelle la particule est une bactérie (et comme l'on verra l'échantillon 12 intègre un antibiotique) La taille des particules 11a-11f observées varie entre 500nm et plusieurs centaines de µm, voire quelques millimètres.

La « classification » d'une séquence d'images d'entrée consiste en la détermination d'au moins une classe parmi un ensemble de classes possibles descriptives des images. Par exemple, dans le cas de particules de type bactérie, on peut avoir une classification binaire, i.e. deux classes possibles d'effet « division » ou « pas de division », témoignant respectivement d'une résistance ou non à un antibiotique. La présente invention ne sera limitée à aucune sorte de classification particulière, même si on décrira principalement l'exemple d'une classification binaire de l'effet d'un antibiotique sur ladite particule cible 11a-11f.

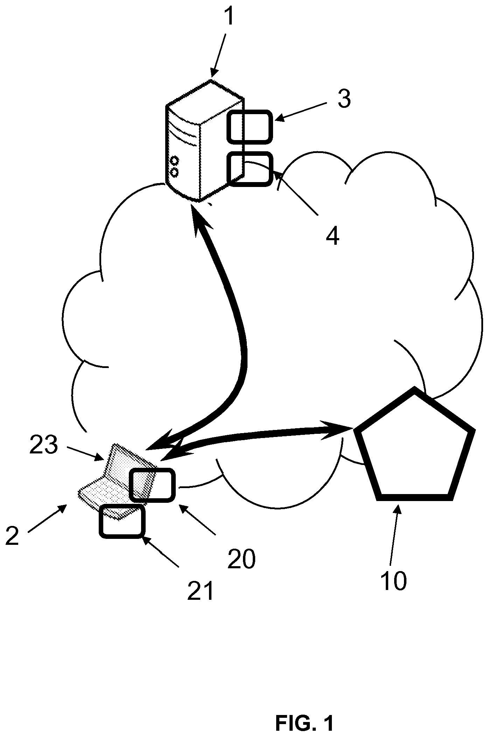

Les présents procédés sont mis en œuvre au sein d'une architecture telle que représentée par la **Figure 1****,** grâce à un serveur 1 et un client 2. Le serveur 1 est l'équipement d'apprentissage (mettant en œuvre le procédé d'apprentissage) et le client 2 est un équipement d'utilisation (mettant en œuvre le procédé de classification), par exemple un terminal d'un médecin ou d'un hôpital.

Il est tout à fait possible que les deux équipements 1, 2 soient confondus, mais de façon préférée le serveur 1 est un équipement distant, et le client 2 un équipement grand public, notamment un ordinateur du bureau, un portable, etc. L'équipement client 2 est avantageusement connecté à un dispositif d'observation 10, de sorte à pouvoir directement acquérir ladite image d'entrée (ou comme l'on verra plus loin des données « brutes » d'acquisition telles qu'une image globale de l'échantillon 12, voire des matrices électromagnétiques), typiquement pour la traiter en direct, alternativement on chargera l'image d'entrée sur l'équipement client 2.

Dans tous les cas, chaque équipement 1, 2 est typiquement un équipement informatique distant relié à un réseau local ou un réseau étendu tel que le réseau internet pour l'échange des données. Chacun comprend des moyens de traitement de données 3, 20 de type processeur, et des moyens de stockage de données 4, 21 telle qu'une mémoire informatique, par exemple une mémoire flash ou un disque dur. Le client 2 comprend typiquement une interface utilisateur 22 telle qu'un écran pour interagir.

Le serveur 1 stocke avantageusement une base de données d'apprentissage, i.e. un ensemble de séquences d'images de particules 11a-11f dans diverses conditions (voir plus loin) déjà classifiés (par exemple associées à des étiquettes « avec division » ou « sans division » signalant la sensibilité ou la résistance à l'antibiotique). A noter que les données d'apprentissage pourront être associés à des étiquettes définissant les conditions de test, par exemple indiquant pour des cultures de bactéries des « souches », « conditions de l'antibiotique », « temps », etc.

### Acquisition

Même si comme expliqué le présent procédé peut directement prendre en entrée toute image de la particule cible 11a-11f, obtenue d'une manière quelconque. De manière préférée le présent procédé commence par une étape (a) d'obtention de l'image d'entrée à partir de données fournies par un dispositif d'observation 10.

De manière connue, l'homme du métier pourra utiliser des techniques de microscopie holographique numérique DHM, en particulier telles que décrites dans la demande internationale WO2017/207184. En particulier, on pourra acquérir une image en intensité de l'échantillon 12 appelée hologramme, qui n'est pas focalisée sur la particule cible (on parle d'image « out-of-focus »), et qui pourra être traitée par des moyens de traitement de données (intégrés au dispositif 10 ou ceux 20 du client 2 par exemple, voir plus loin). On comprend que l'hologramme « représente » d'une certaine manière toutes les particules 11a-11f dans l'échantillon.

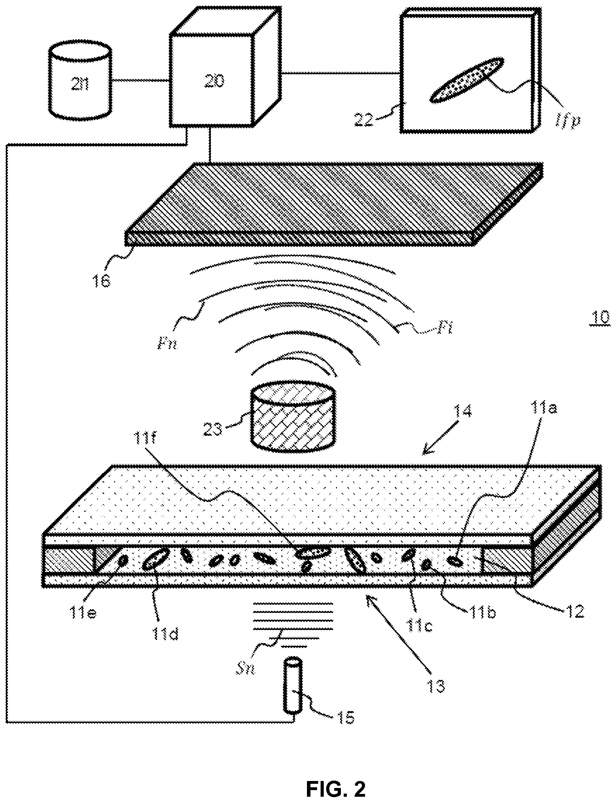

La **Figure 2** illustre un exemple de dispositif d'observation 10 d'une particule 11a-11f présente dans un échantillon 12. L'échantillon 12 est disposé entre une source lumineuse 15, spatialement et temporellement cohérente (e.g. un laser) ou pseudo-cohérente (e.g. une diode électroluminescente, une diode laser), et un capteur numérique 16 sensible dans la gamme spectrale de la source lumineuse. De préférence, la source lumineuse 15 comporte une faible largeur spectrale, par exemple inférieure à 200nm, inférieure à 100nm ou encore inférieure à 25 nm. Dans ce qui suit, il est fait référence à la longueur d'onde d'émission centrale de la source lumineuse, par exemple dans le domaine visible. La source lumineuse 15 émet un signal cohérent Sn orienté sur une première face 13 de l'échantillon, par exemple acheminé par un guide d'onde tel qu'une fibre optique.

L'échantillon 12 (comme expliqué typiquement un milieu de culture) est contenu dans une chambre d'analyse, délimitée verticalement par une lame inférieure et une lame supérieure, par exemple des lames de microscope conventionnelles. La chambre d'analyse est délimitée latéralement par un adhésif ou par tout autre matériau étanche. Les lames inférieure et supérieure sont transparentes à la longueur d'onde de la source lumineuse 15, l'échantillon et la chambre laissant passer par exemple plus de 50% la longueur d'onde de la source lumineuse sous incidence normale sur la lame inférieure.

De préférence, les particules 11a-11f sont disposées dans l'échantillon 12 au niveau de la lame supérieure. La face inférieure de la lame supérieure comprend à cet effet des ligands permettant d'accrocher les particules, par exemple des polycations (e.g. poly-Llysine) dans le cadre de microorganismes Ceci permet de contenir les particules dans une épaisseur égale à, ou proche de, la profondeur de champ du système optique, à savoir dans une épaisseur inférieure à 1mm (e.g. lentille à tube), et de préférence inférieure à 100µm (e.g. objectif de microscope). Les particules 11a-11f peuvent néanmoins se déplacer dans l'échantillon 12.

De préférence, le dispositif comprend un système optique 23 constitué, par exemple, d'un objectif de microscope et d'une lentille de tube, disposé dans l'air et à distance fixe de l'échantillon. Le système optique 23 est optionnellement équipé d'un filtre pouvant être situé devant l'objectif ou entre l'objectif et la lentille de tube. Le système optique 23 est caractérisé par son axe optique, son plan d'objet, également dénommé plan de mise au point, à une distance de l'objectif, et son plan d'image, conjugué du plan d'objet par le système optique. En d'autres termes, à un objet situé dans le plan d'objet, correspond une image nette de cet objet dans le plan image, également appelé plan focal. Les propriétés optiques du système 23 sont fixes (e.g. optique à focale fixe). Les plans objet et image sont orthogonaux à l'axe optique.

Le capteur d'image 16 est situé, en regard d'une seconde face 14 de l'échantillon, dans le plan focal ou à proximité de ce dernier. Le capteur, par exemple un capteur CCD ou CMOS, comprend un réseau bidimensionnel périodique de sites élémentaires sensibles, et une électronique de proximité qui règle le temps d'exposition et la remise à zéro des sites, d'une manière connue en soi. Le signal de sortie d'un site élémentaire est fonction de la quantité de rayonnement de la gamme spectrale incident sur ledit site pendant la durée d'exposition. Ce signal est ensuite converti, par exemple par l'électronique de proximité, en point image, ou « pixel », d'une image numérique. Le capteur produit ainsi une image numérique sous forme d'une matrice à C colonnes et L lignes. Chaque pixel de cette matrice, de coordonnées (c, l) dans la matrice, correspond d'une manière connue en soi à une position de coordonnées cartésiennes (x(c, l), y(c, l)) dans le plan focal du système optique 23, par exemple la position du centre du site sensible élémentaire de forme rectangulaire.

Le pas et le facteur de remplissage du réseau périodique sont choisis pour respecter le critère Shannon-Nyquist vis-à-vis de la taille des particules observées, de manière à définir au moins deux pixels par particule. Ainsi, le capteur d'image 16 acquiert une image en transmission de l'échantillon dans la gamme spectrale de la source lumineuse.

L'image acquise par le capteur d'image 16 comprend des informations holographiques dans la mesure où elle résulte de l'interférence entre une onde diffractée par les particules 11a-11f et une onde de référence ayant traversé l'échantillon sans avoir interagi avec lui. On comprend évidemment, comme décrit plus haut, que dans le cadre d'un capteur CMOS ou CCD, l'image numérique acquise est une image en intensité, l'information de phase étant donc ici codée dans cette image en intensité.

Alternativement, il est possible de diviser le signal cohérent Sn issu de la source lumineuse 15 en deux composantes, par exemple au moyen d'une lame semi-transparente. La première composante sert alors d'onde de référence et la seconde composante est diffractée par l'échantillon 12, l'image dans le plan image du système optique 23 résultant de l'interférence entre l'onde diffractée et l'onde de référence.

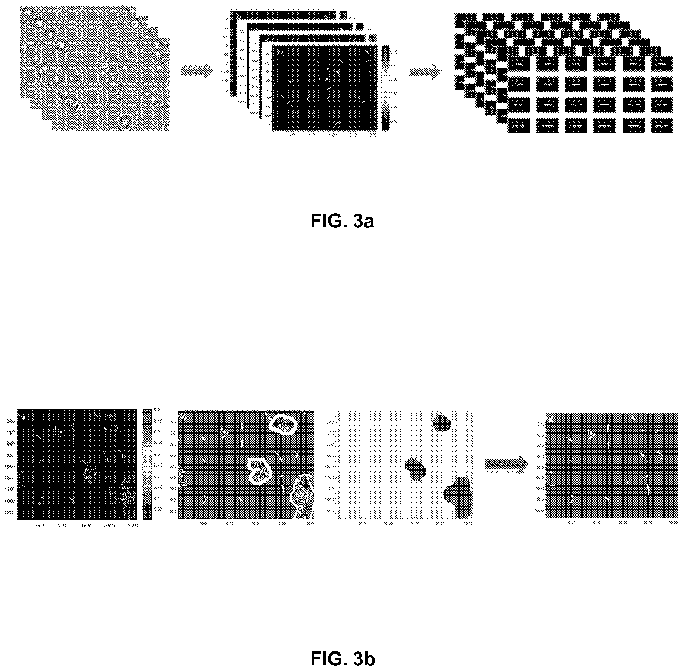

En référence à la **Figure 3a****,** il est possible dans l'étape (a) de reconstruire à partir de l'hologramme une pluralité d'images globale de l'échantillon 12, puis d'extraire chaque image d'entrée d'une image globale de l'échantillon.

On comprend en effet que la particule cible 11a-11f doit être représentée d'une manière homogène dans chaque image d'entrée, en particulier centrée et alignée selon une direction prédéterminée (par exemple la direction horizontale). Les images d'entrée doivent en outre présenter une taille standardisée (II est également souhaitable qu'on ne voie que la particule cible 11a-11f dans l'image d'entrée). On appelle ainsi « vignette » (en anglais thumbnail) l'image d'entrée, on peut définir par exemple une taille de 250x250 pixels. Dans la mesure où l'on souhaite une séquence d'images d'entrée, on prend par exemple une image par minute pendant un intervalle de temps de 120 minutes, on obtient ainsi une séquence de 120 images d'entrée.

La reconstruction de chaque image globale est mise en œuvre comme expliqué par des moyens de traitement de données du dispositif 10 ou ceux 20 du client 2.

Typiquement, on construit (pour un instant d'acquisition) une série de matrices complexes nommées « matrices électromagnétiques », modélisant à partir de l'image en intensité de l'échantillon 12 (l'hologramme) le front d'onde lumineux propagé le long de l'axe optique pour une pluralité d'écarts par rapport au plan de mise au point du système optique 23, et en particulier des écarts positionnés dans l'échantillon.

Ces matrices peuvent être projetées dans l'espace réel (par exemple via la norme hermitienne), de sorte à constituer une pile d'images globales à diverses distances de focalisation.

A partir de là on peut déterminer une distance de focalisation moyenne (et sélectionner l'image globale correspondante, ou la recalculer à partir de l'hologramme), voire déterminer une distance de focalisation optimale pour la particule cible (et à nouveau sélectionner l'image globale correspondante, ou la recalculer à partir de l'hologramme).

Dans tous les cas, en référence à la **Figure 3b****,** l'étape (a) comprend avantageusement la segmentation desdites images globales de sorte à détecter ladite particule cible dans l'échantillon, puis le recadrage. En particulier, chaque image d'entrée peut être extraite d'une des images globales de l'échantillon, de sorte à représenter ladite particule cible de ladite manière homogène.

En général, la segmentation permet de détecter toutes les particules d'intérêt, en supprimant les artefacts tels que des filaments ou des micro-colonies, de sorte à améliorer la ou les images globales, puis on sélectionne une des particules détectées comme la particules cible, et la vignette correspondante est extraite. Comme expliqué, on peut faire ce travail pour toutes les particules détectées.

La segmentation pourra être mise en œuvre de toute manière connue. Dans l'exemple de la figure 3b, on commence par une segmentation fine pour éliminer les artefacts, puis on met en œuvre une segmentation moins fine pour cette fois détecter les particules 11a-11f. L'homme du métier pourra utiliser toute technique de segmentation connue.

Pour obtenir la séquence d'images d'entrée pour une particule cible 11a-11f, on pourra mettre en œuvre des techniques de tracking pour suivre les éventuels déplacements de la particule d'une image globale à la suivante.

A noter que l'ensemble des images d'entrée obtenus pour un échantillon (pour plusieurs voire toutes les particules de l'échantillon 12, et ce dans le temps) peut être mis en commun pour former une base descriptive de l'échantillon 12 (en d'autres termes une base descriptive de l'expérience), comme l'on voit à droite de la figure 3a, notamment copiée sur les moyens de stockage 21 du client 2. On parle de niveau « champ », par opposition au niveau « particule ». Par exemple, si les particules 11a-11f sont des bactéries et l'échantillon 12 contient (ou non un antibiotique), cette base descriptive contient toutes les informations sur la croissance, la morphologie, la structure interne et les propriétés optiques de ces bactéries sur tout le champ de l'acquisition. Comme l'on verra, cette base descriptive peut être transmise au serveur 1 pour intégration dans ladite base d'apprentissage.

### Stacking

Comme l'on va voir, le présent procédé se distingue en ce qu'il peut travailler directement sur une séquence d'images d'entrée, sans avoir besoin ni de travailler image par image, ni d'extraire des cartes de caractéristiques (« feature map ») de manière intermédiaire. De surcroit, on verra qu'un CNN très simple et léger suffit à réaliser une classification fiable et efficace.

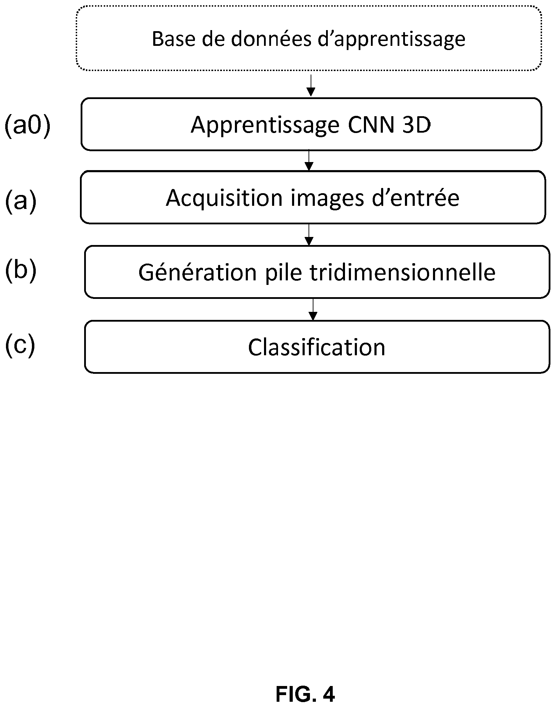

En référence à la **Figure 4****,** le présent procédé comprend une étape (b) de concaténation desdites images d'entrée de la séquence sous la forme d'une pile tridimensionnelle, autrement dit un « stack » 3D. Plus précisément, les images d'entrée ont toute la même taille et forment une séquence de matrices, il suffit donc de les empiler selon l'ordre des images d'entrée de sorte à obtenir la pile tridimensionnelle.

Cette pile tridimensionnelle peut donc être vue comme une image présentant autant de canaux que d'instants temporels d'acquisition, même si comme l'on verra plus loin le présent procédé va traiter de manière très originale cette pile comme un unique objet tridimensionnel (par exemple de taille 250x250x120 si on a des images d'entrée de taille 250x250 et une image acquise par minute pendant 120 minutes) à un seul canal, de la même manière qu'une image RGB est un objet bidimensionnel à trois canaux. Les deux premières dimensions sont classiquement les dimensions spatiales (i.e. la taille des images d'entrée) et la troisième dimension est la dimension « temporelle » (instant d'acquisition).

De manière préférée, l'étape (b) comprend le sous-échantillonnage de ladite pile tridimensionnelle, i.e. une réduction de la taille de l'entrée.

Ledit sous-échantillonnage peut être mis en œuvre sur la dimension temporelle de la pile et/ou ses dimensions spatiales, préférentiellement les deux.

En particulier :
- En ce qui concerne la dimension temporelle, on peut la réduire en découpant la période d'acquisition en *n* intervalles et en sélectionnant les *n*+*1* images de la séquence correspondant aux extrémités de ces intervalles, par exemple en ne gardant que 5 images sur une séquence de 120 images, ce qui revient à prendre une image toutes les 120/4 = 30 minutes (en particulier les images acquises au bout de 1, 30, 60, 90 et 120 minutes). Il reste toutefois possible de sélectionner les images de manière non régulières (par exemple en sélectionnant plus d'images au début de la période d'acquisition qu'à la fin)
- En ce qui concerne les dimensions spatiales, on peut les réduire avec n'importe quelle technique de sous-échantillonnage d'image avec un facteur d'échantillonnage donné (sur chaque axe pour garder les proportions), par exemple un facteur 2.

En mettant en œuvre les deux sous-échantillonnages ci-avant en combinaison, on passe d'un stack de taille 250x250x120 à un stack de taille 125x125x5 (on réduit la taille du stack presque d'un facteur 100).

On note que ce sous-échantillonnage peut être sous fait en amont de la génération de la pile (en sélectionnant et en modifiant les images d'entrée).

### Classification

Dans une étape (c), ladite pile tridimensionnelle est classifiée directement au moyen d'un réseau de neurones à convolution adapté, dit « CNN 3D » du fait de sa capacité à traiter les objets tridimensionnels que sont les piles (stacks). Il est en effet important de comprendre, comme évoqué, que la pile tridimensionnelle est traitée par le CNN comme un objet unique de dimension trois (i.e. à un seul canal), et non pas comme un objet de dimension deux à plusieurs canaux (comme l'est par exemple une image RGB).

Par classification directe, ou « end-to-end », on entend sans extraction séparée d'au moins une carte de caractéristiques de ladite particule cible 11a-11f : on comprend que le CNN a naturellement des états internes sous la forme de cartes de caractéristiques, mais ces dernières ne sont jamais renvoyées à l'extérieur du CNN, celui-ci ayant pour seule sortie le résultat de la classification.

On rappelle que de façon générale les CNN sont particulièrement adaptés pour les taches de vision et plus particulièrement de classification d'image. Généralement, un CNN utilise une pluralité de couches de convolution, et le présent CNN 3D utilise au moins une couche de convolution 3D qui modélise la dépendance spatio-temporelle entre les différentes images d'entrée.

Par couche de convolution 3D, on entend une couche de convolution appliquant des filtres de dimension quatre, et ainsi apte à travailler sur plusieurs canaux de piles déjà tridimensionnelles, c'est-à-dire une carte de caractéristiques de dimension quatre. En d'autres termes, la couche de convolution 3D applique à une carte de caractéristiques d'entrée de dimension quatre des filtres de dimension quatre de sorte à générer une carte de caractéristiques de sortie de dimension quatre. La quatrième et dernière dimension est la profondeur sémantique, comme dans toute carte de caractéristiques.

Cela est à différentier des couches de convolution classiques qui sont ne sont aptes qu'à travailler sur des cartes de caractéristiques tridimensionnelles représentant plusieurs canaux d'objets bidimensionnels (images).

Cette notion de convolution 3D peut paraître contre-intuitive, mais elle généralise la notion de couche de convolution qui prévoit seulement qu'on applique une pluralité de « filtres » d'une profondeur égale au nombre de canaux de l'entrée (i.e. la profondeur de la carte de caractéristiques d'entrée), en les balayant sur l'ensemble des dimensions de l'entrée (en 2D pour une image), le nombre de filtres définissant la profondeur de sortie.

Notre convolution 3D applique donc des filtres de dimension quatre de profondeur égale au nombre de canaux de piles tridimensionnelles en entrée, et balaie ces filtres sur tout le volume d'une pile tridimensionnelle, donc les deux dimensions spatiales mais aussi la dimension temporelle, i.e. en 3D (d'où l'appellation convolution 3D). On obtient ainsi bien une pile tridimensionnelle par filtre, i.e. une carte de caractéristiques de dimension quatre. Dans une couche de convolution classique, utiliser un grand nombre de filtres permet certes augmenter la profondeur sémantique en sortie (le nombre de canaux), mais on aura toujours une carte de caractéristiques de dimension trois.

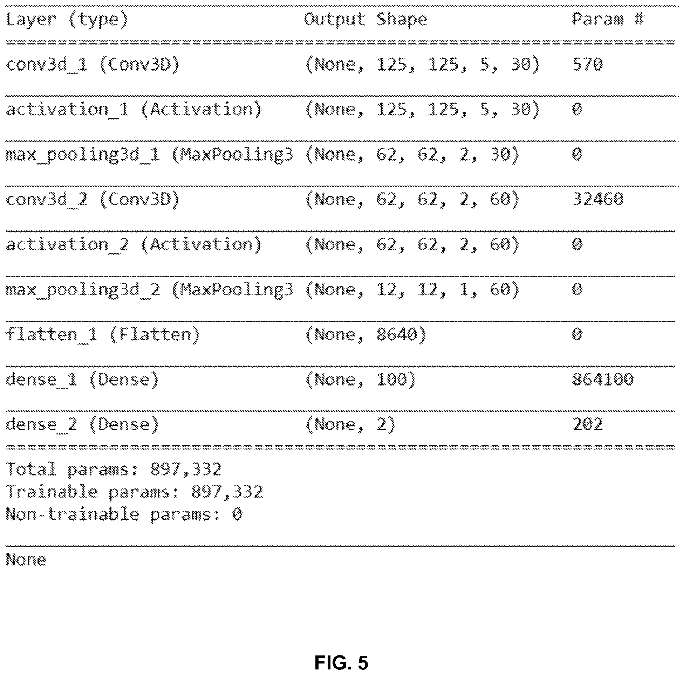

On comprend qu'une couche de convolution 3D reste plus lourde et nécessite une plus forte puissance de calcul, mais comme expliqué, une architecture très simple (et bien plus simple que des CNN connus tel que VGG616) suffit. La **Figure 5** représente l'architecture d'un mode de réalisation du présent CNN 3D.

De manière classique, cette architecture comprend avantageusement une succession de blocs dit de convolution composés d'une couche de convolution 3D, d'une couche d'activation (par exemple la fonction ReLU) pour augmenter la profondeur des cartes de caractéristiques, et une couche de mise en commun 3D (pooling) permettant de diminuer la taille de la carte de caractéristiques (généralement d'un facteur 2). Ce qui est remarquable est que deux blocs de convolution peuvent suffire, de sorte que très préférentiellement le présent CNN 3D ne comprend que deux blocs de convolution.

Par couche de mise en commun 3D on entend comme pour la convolution 3D une couche apte à travailler sur des cartes de caractéristiques de dimension quatre, ayant un ou plusieurs canaux de piles déjà tridimensionnelles. En d'autres termes, la réduction de taille est sur toutes les dimensions d'une pile tridimensionnelle, i.e. les trois premières dimensions d'une carte de caractéristiques de dimension quatre.

Dans la suite de la présente description, on fera bien la distinction entre le nombre de « dimensions » des cartes de caractéristiques, au sens géométrique, c'est-à-dire le nombre de directions indépendantes dans lesquelles ces cartes s'étendent (par exemple un vecteur est un objet de dimension 1, une image est de dimension 2, et les présentes cartes de caractéristiques sont de dimension 4), et le nombre de « variables » de ces cartes de caractéristiques, c'est-à-dire la taille selon chaque dimension, i.e. le nombre de degrés de liberté indépendants (qui correspond en pratique à la notion de dimension dans un espace vectoriel - plus précisément, l'ensemble des cartes de caractéristiques ayant un nombre de variables donné constitue un espace vectoriel de dimension égale à ce nombre de variables).

Ainsi dans l'exemple de la figure 5, le CNN 3D commence comme expliqué par 6 couches réparties en 2 blocs. Le premier prend en entrée la pile tridimensionnelle à un seul canal (formant ainsi un objet de taille 125x125x5x1 lorsqu'elle est avantageusement sous-échantillonnée comme proposé ci-avant), et comprend un enchainement convolution+ReLU (une première couche de convolution 3D, et une couche d'activation à fonction ReLU) montant la profondeur à 30 puis une couche de max pooling (on peut aussi utiliser du global average pooling), avec en sortie une carte de caractéristiques de taille 62x62x2x30 (la couche de mise en commun 3D travaille comme expliqué sur les trois dimensions et pas seulement les deux dimensions spatiales - ainsi on divise par deux y compris la dimension temporelle).

Dans l'exemple représenté, la première couche de convolution 3D utilise 30 filtres de dimension 3x3x3x1, et nécessite ainsi ((3*3*3*1)+1)*30=570 paramètres.

Le deuxième bloc a une architecture identique au premier bloc et génère en sortie d'un nouvel ensemble convolution+ReLU (une deuxième couche de convolution 3D, et une couche d'activation à fonction ReLU) une carte de caractéristiques de taille 62x62x2x60 (profondeur doublée) et en sortie de la couche de max pooling une carte de caractéristiques de taille 12x12x1x60 (on note que la réduction de taille spatiale est cette fois d'un facteur cinq, mais la réduction de taille temporelle est toujours d'un facteur deux).

Cette fois, la deuxième couche de convolution 3D utilise 60 filtres de dimension 3x3x3x30, et nécessite ainsi ((3*3*3*30)+1)*60=32460 paramètres.

En sortie du dernier bloc de convolution (en l'espèce le deuxième), le CNN 3D comprend avantageusement une couche « d'aplatissement » transformant la carte de caractéristiques « finale » (contenant l'information la plus « profonde ») en sortie de ce bloc en un vecteur (objet de dimension 1). Ainsi on passe par exemple de la carte de caractéristiques de taille 12x12x1x60 à un vecteur de taille 12*12*1*60=8640. On comprendra qu'on est limité à aucunes tailles de carte/filtre à quelque niveau que ce soit, et que les tailles citées-ci avant ne sont que des exemples.

Enfin de manière classique on termine par une ou plusieurs couches entièrement connectées (FC, ou couches « dense » comme indiqué dans la figure 5) et éventuellement une couche d'activation finale, par exemple softmax. Dans l'exemple représenté, une première couche FC transforme le vecteur de taille 8640 en un vecteur réduit de taille 100 (ce qui nécessite (8640+1)*100=864100 paramètres), et une deuxième couche FC transforme le vecteur de taille 8640 en un vecteur final de taille 2 (ce qui nécessite (100+1)*2=202 paramètres).

De manière préférée, le CNN 3D est composé de (i.e. comprend exactement) une séquence de blocs de convolution, puis une couche d'aplatissement, et enfin une ou plusieurs couches entièrement connectées.

Cette partie finale du CNN 3D renvoie le résultat escompté, en l'espèce la classe de la séquence d'image d'entrée (le vecteur de taille 2 correspond à un résultat binaire).

On voit donc qu'on a un nombre total de paramètres inférieur à 900000, ce qui est remarquablement faible pour un CNN (on a couramment plusieurs dizaines de millions de paramètres) en particulier au vu du fait que les données d'entrée sont des séquences d'images déjà de très grande taille. Le présent CNN 3D peut donc être utilisé par de nombreux clients 2, y compris ayant des ressources informatiques modestes.

De manière préférée, le procédé peut comprendre une étape (a0) d'apprentissage, par les moyens de traitement de données 3 du serveur 1, à partir d'une base d'apprentissage, des paramètres du CNN 3D. Cette étape est en effet typiquement mise en œuvre très en amont, en particulier par le serveur 1 distant. Comme expliqué, la base d'apprentissage peut comprendre un certain nombre de données d'apprentissage, en particulier des séquences d'images associées à leur classe (par exemple « division » ou « pas de division » si classification binaire).

L'apprentissage du CNN 3D peut être réalisé de façon classique. La fonction de coût d'apprentissage peut être composée d'une attache aux données classique - entropie croisée - à minimiser via un algorithme de descente de gradient.

Dans tous les modes de réalisation, les paramètres du CNN appris peuvent être stockés le cas échéant sur des moyens de stockage de données 21 du client 2 pour utilisation en classification. A noter que le même CNN peut être embarqué sur de nombreux clients 2, un seul apprentissage est nécessaire.

### Produit programme d'ordinateur

Selon un deuxième et un troisième aspects, l'invention concerne un produit programme d'ordinateur comprenant des instructions de code pour l'exécution (en particulier sur les moyens de traitement de données 3, 20 du serveur 1 et/ou du client 2) d'un procédé de classification d'une séquence d'image d'entrée représentant une particule cible 11a-11f dans un échantillon 12, ainsi que des moyens de stockage lisibles par un équipement informatique (une mémoire 4, 21 du serveur 1 et/ou du client 2) sur lequel on trouve ce produit programme d'ordinateur.

## Revendications

1. Procédé de classification d'une séquence d'images d'entrée représentant une particule cible (11a-11f) dans un échantillon (12) au cours du temps, le procédé étant **caractérisé en ce qu'**il comprend la mise en œuvre, par des moyens de traitement de données (20) d'un client (2), d'étapes de :
(b) Concaténation desdites images d'entrée de la séquence sous la forme d'une pile tridimensionnelle ;
(c) Classification directe de ladite pile tridimensionnelle au moyen d'un réseau de neurones à convolution, CNN, ledit CNN étant composé d'une succession de blocs de convolution composés d'une couche de convolution dite 3D, appliquant à une carte de caractéristiques d'entrée de dimension quatre des filtres de dimension quatre de sorte à générer une carte de caractéristiques de sortie de dimension quatre, une couche d'activation et une couche de mise en commun 3D, puis une couche d'aplatissement, et enfin une ou plusieurs couches entièrement connectées,
la succession de blocs de convolution comprenant au moins deux blocs de convolution, dont un premier bloc et un deuxième bloc, la couche de convolution 3D du premier bloc appliquant 30 filtres de dimension 3x3x3x1 et la couche de convolution 3D du deuxième bloc appliquant 60 filtres de dimension 3x3x3x30

2. Procédé selon la revendication 1, dans lequel les particules (11a-11f) sont représentées d'une manière homogène dans chaque image d'entrée, en particulier centrées et alignées selon une direction prédéterminée.

3. Procédé selon la revendication 2, comprenant une étape (a) d'extraction de chaque image d'entrée d'une image globale de l'échantillon, de sorte à représenter ladite particule cible (11a-11f) de ladite manière homogène.

4. Procédé selon la revendication 3, dans lequel ladite extraction l'étape (a) comprend, pour chaque image d'entrée, la segmentation de ladite image globale de sorte à détecter ladite particule cible (11a-11f) dans l'échantillon (12), puis le recadrage de l'image d'entrée sur ladite particule cible (11a-11f) détectée.

5. Procédé selon l'une des revendications 3 et 4, dans lequel l'étape (a) comprend l'obtention de ladite image globale à partir d'une image en intensité de l'échantillon (12) acquise par un dispositif d'observation (10).

6. Procédé selon l'une des revendications précédentes, dans lequel ladite pile tridimensionnelle présente deux dimensions spatiales et une dimension temporelle, lesdits filtres et cartes de caractéristiques présentant comme trois premières dimensions lesdites dimensions spatiales et temporelle, et comme quatrième dimension une profondeur sémantique.

7. Procédé selon la revendication 6, dans lequel les filtres de ladite couche de convolution 3D présentent une profondeur égale à la profondeur de la carte de caractéristiques d'entrée, et la carte de caractéristiques de sortie présente une profondeur égale au nombre de filtres de la couche de convolution 3D.

8. Procédé selon l'une des revendications précédentes, dans lequel ledit CNN comprend seulement deux blocs de convolution.

9. Procédé selon l'une des revendications 1 à 8, comprenant une étape (a0) d'apprentissage, par des moyens de traitement de données (3) d'un serveur (1), des paramètres dudit CNN à partir d'une base d'apprentissage de séquences déjà classifiées d'images de particules (11a-11f) dans ledit échantillon (12).

10. Système de classification d'une séquence d'images d'entrée représentant une particule cible (11a-11f) dans un échantillon (12) au cours du temps, comprenant au moins un client (2) comprenant des moyens de traitement de données (20), **caractérisé en ce que** lesdits moyens de traitement de données (20) sont configurés pour implémenter :
- la concaténation desdites images d'entrée de la séquence sous la forme d'une pile tridimensionnelle ;
- La classification directe de ladite pile tridimensionnelle au moyen d'un réseau de neurones à convolution, CNN, ledit CNN étant composé d'une succession de blocs de convolution composés d'une couche de convolution dite 3D, appliquant à une carte de caractéristiques d'entrée de dimension quatre des filtres de dimension quatre de sorte à générer une carte de caractéristiques de sortie de dimension quatre, une couche d'activation et une couche de mise en commun 3D, puis une couche d'aplatissement, et enfin une ou plusieurs couches entièrement connectées,
la succession de blocs de convolution comprenant au moins deux blocs de convolution, dont un premier bloc et un deuxième bloc, la couche de convolution 3D du premier bloc appliquant 30 filtres de dimension 3x3x3x1 et la couche de convolution 3D du deuxième bloc appliquant 60 filtres de dimension 3x3x3x30

11. Système selon la revendication 10, comprenant en outre un dispositif d'observation (10) de ladite particule cible (11a-11f) dans l'échantillon (12).

12. Produit programme d'ordinateur comprenant des instructions de code pour l'exécution d'un procédé selon l'une des revendications 1 à 9 de classification d'une séquence d'images d'entrée représentant une particule cible (11a-11f) dans un échantillon (12) au cours du temps, lorsque ledit programme est exécuté sur un ordinateur.

13. Moyen de stockage lisible par un équipement informatique sur lequel un produit programme d'ordinateur comprend des instructions de code pour l'exécution d'un procédé selon l'une des revendications 1 à 9 de classification d'une séquence d'images d'entrée représentant une particule cible (11a-11f) dans un échantillon (12) au cours du temps.

## Patentansprüche

1. Verfahren zur Klassifizierung einer Sequenz von Eingangsbildern, die ein Zielpartikel (11a-11f) in einer Probe (12) im Zeitverlauf darstellt, wobei das Verfahren **dadurch gekennzeichnet ist, dass** es durch Datenverarbeitungsmittel (20) eines Clients (2) die Durchführung der folgenden Schritte umfasst:
(b) Verketten der Eingangsbilder der Sequenz in Form eines dreidimensionalen Stapels;
(c) direktes Klassifizieren des dreidimensionalen Stapels mittels eines neuronalen Faltungsnetzwerks, CNN, wobei das CNN aus einer Abfolge von Faltungsblöcken zusammengesetzt ist, die aus einer sogenannten 3D-Faltungsschicht zusammengesetzt sind, die auf eine Eingangs-Merkmalskarte der Dimension vier Filter der Dimension vier anwendet, um eine Ausgangs-Merkmalskarte der Dimension vier, eine Aktivierungsschicht und eine 3D-Pooling-Schicht, dann eine Abflachungsschicht und schließlich eine oder mehrere vollständig verbundene Schichten zu erzeugen,
wobei die Abfolge von Faltungsblöcken mindestens zwei Faltungsblöcke umfasst, einen ersten Block und einen zweiten Block, wobei die 3D-Faltungsschicht des ersten Blocks 30 Filter der Dimension 3x3x3x1 und die 3D-Faltungsschicht des zweiten Blocks 60 Filter der Dimension 3x3x3x30 anwendet.

2. Verfahren nach Anspruch 1, wobei die Partikel (11a-11f) in jedem Eingangsbild homogen, insbesondere zentriert und in einer vorbestimmten Richtung ausgerichtet, dargestellt werden.

3. Verfahren nach Anspruch 2, umfassend einen Schritt (a) des Extrahierens jedes Eingangsbildes aus einem Gesamtbild der Probe, um das Zielpartikel (11a-11f) auf diese homogene Weise darzustellen.

4. Verfahren nach Anspruch 3, wobei die Extraktion der Schritt (a) für jedes Eingangsbild die Segmentierung des Gesamtbildes, um das Zielpartikel (11a-11f) in der Probe (12) zu erkennen, und dann das Zuschneiden des Eingangsbildes auf das erkannte Zielpartikel (11a-11f) umfasst.

5. Verfahren nach einem der Ansprüche 3 und 4, wobei Schritt (a) das Erhalten des Gesamtbildes aus einem Intensitätsbild der Probe (12) umfasst, das von einer Beobachtungsvorrichtung (10) erfasst wird.

6. Verfahren nach einem der vorhergehenden Ansprüche, wobei der dreidimensionale Stapel zwei räumliche Dimensionen und eine zeitliche Dimension aufweist, wobei die Filter und Merkmalskarten als erste drei Dimensionen die räumlichen und zeitliche Dimension/en und als vierte Dimension eine semantische Tiefe aufweisen.

7. Verfahren nach Anspruch 6, wobei die Filter der 3D-Faltungsschicht eine Tiefe aufweisen, die gleich der Tiefe der Eingangs-Merkmalskarte ist, und die Ausgangs-Merkmalskarte eine Tiefe aufweist, die gleich der Anzahl der Filter der 3D-Faltungsschicht ist.

8. Verfahren nach einem der vorhergehenden Ansprüche, wobei das CNN nur zwei Faltungsblöcke umfasst.

9. Verfahren nach einem der Ansprüche 1 bis 8, das einen Schritt (a0) des Lernens der Parameter des CNN durch Datenverarbeitungsmittel (3) eines Servers (1) anhand einer Trainingsbasis bereits klassifizierter Sequenzen von Partikelbildern (11a-11f) in der Probe (12) umfasst.

10. System zur Klassifizierung einer Eingangsbildsequenz, die ein Zielpartikel (11a-11f) in einer Probe (12) im Zeitverlauf darstellt, umfassend mindestens einen Client (2), der Datenverarbeitungsmittel (20) umfasst, **dadurch gekennzeichnet, dass** die Datenverarbeitungsmittel (20) ausgelegt sind, um zu implementieren:
- die Verkettung der Eingangsbilder der Sequenz in Form eines dreidimensionalen Stapels;
- die direkte Klassifizierung des dreidimensionalen Stapels mittels eines neuronalen Faltungsnetzwerks, CNN, wobei das CNN aus einer Abfolge von Faltungsblöcken zusammengesetzt ist, die aus einer sogenannten 3D-Faltungsschicht zusammengesetzt sind, die auf eine Eingangs-Merkmalskarte der Dimension vier Filter der Dimension vier anwendet, um eine Ausgangs-Merkmalskarte der Dimension vier, eine Aktivierungsschicht und eine 3D-Pooling-Schicht, dann eine Abflachungsschicht und schließlich eine oder mehrere vollständig verbundene Schichten zu erzeugen,
wobei die Abfolge von Faltungsblöcken mindestens zwei Faltungsblöcke umfasst, einen ersten Block und einen zweiten Block, wobei die 3D-Faltungsschicht des ersten Blocks 30 Filter der Dimension 3x3x3x1 und die 3D-Faltungsschicht des zweiten Blocks 60 Filter der Dimension 3x3x3x30 anwendet.

11. System nach Anspruch 10, das ferner eine Vorrichtung (10) zur Beobachtung des Zielpartikels (11a-11f) in der Probe (12) umfasst.

12. Rechnerprogrammprodukt, das Codeanweisungen für die Ausführung eines Verfahrens nach einem der Ansprüche 1 bis 9 zur Klassifizierung einer Eingangsbildsequenz umfasst, die ein Zielpartikel (11a-11f) in einer Probe (12) im Zeitverlauf darstellt, wenn das Programm auf einem Rechner ausgeführt wird.

13. Speichermedium, das von einer IT-Ausrüstung lesbar ist, auf dem ein Rechnerprogrammprodukt Codeanweisungen für die Ausführung eines Verfahrens nach einem der Ansprüche 1 bis 9 zur Klassifizierung einer Eingangsbildsequenz umfasst, die ein Zielpartikel (11a-11f) in einer Probe (12) im Zeitverlauf darstellt.

## Claims

1. A method for classifying a sequence of input images representing a target particle (11a-11f) in a sample (12) over time, the method being **characterised in that** it comprises the implementation, by data processing means (20) of a client (2), the following steps:
(b) concatenating said input images of the sequence in the form of a three-dimensional stack;
(c) Direct classifying said three-dimensional stack by means of a convolution neural network, CNN, said CNN being composed of a succession of convolution blocks composed of a so-called 3D convolution layer, applying to an input feature map of dimension four filters of dimension four so as to generate an output feature map of dimension four, an activation layer and a 3D pooling layer, then a flattening layer, and finally one or more fully connected layers,
the succession of convolution blocks comprising at least two convolution blocks, including a first block and a second block, the 3D convolution layer of the first block applying 30 filters of dimension 3x3x3x1 and the 3D convolution layer of the second block applying 60 filters of dimension 3x3x3x30.

2. The method according to claim 1, wherein the particles (11a-11f) are represented in a homogeneous manner in each input image, in particular centred and aligned in a predetermined direction.

3. The method according to claim 2, comprising a step (a) of extracting from each input image a global image of the sample, so as to represent said target particle (11a-11f) in said homogeneous manner

4. The method according to claim 3, wherein said extraction step (a) comprises, for each input image, segmenting said overall image so as to detect said target particle (11a-11f) in the sample (12), and then cropping the input image onto said detected target particle (11a-11f).

5. The method according to one of claims 3 and 4, wherein step (a) comprises obtaining said global image from an intensity image of the sample (12) acquired by an observation device (10).

6. The method according to one of the preceding claims, wherein said three-dimensional stack has two spatial dimensions and one temporal dimension, said filters and feature maps having said spatial and temporal dimensions as the first three dimensions, and semantic depth as the fourth dimension.

7. The method according to claim 6, wherein the filters of said 3D convolution layer have a depth equal to the depth of the input feature map, and the output feature map has a depth equal to the number of filters of the 3D convolution layer.

8. The method according to one of the preceding claims, wherein said CNN comprises only two convolution blocks.

9. The method according to one of claims 1 to 8, comprising a step (a0) of learning, by data processing means (3) of a server (1), the parameters of said CNN from a learning base of already classified sequences of images of particles (11a-11f) in said sample (12).

10. The system for classifying a sequence of input images representing a target particle (11a-11f) in a sample (12) over time, comprising at least one client (2) comprising data processing means (20), **characterised in that** said data processing means (20) are configured to implement:
- concatenating the said input images of the sequence in the form of a three-dimensional stack;
- Direct classifying of the said three-dimensional stack by means of a convolution neural network, CNN, the said CNN being composed of a succession of convolution blocks made up of a so-called 3D convolution layer, applying to an input feature map of dimension four filters of dimension four so as to generate an output feature map of dimension four, an activation layer and a 3D pooling layer, then a flattening layer, and finally one or more fully connected layers,
the succession of convolution blocks comprising at least two convolution blocks, including a first block and a second block, the 3D convolution layer of the first block applying 30 filters of dimension 3x3x3x1 and the 3D convolution layer of the second block applying 60 filters of dimension 3x3x3x30.

11. The system according to claim 10, further comprising an observation device (10) observing said target particle (11a-11f) in the sample (12).

12. Computer program product comprising code instructions for performing a method according to any one of claims 1 to 9 of classifying a sequence of input images representing a target particle (11a-11f) in a sample (12) over time, when said program is executed on a computer.

13. Computer-readable storage medium on which a computer program product comprises code instructions for executing a method according to any one of claims 1 to 9 of classifying a sequence of input images representing a target particle (11a-11f) in a sample (12) over time.
